# EUROPEAN PATENT APPLICATION

(11) **EP 4 257 825 A1**
(43) Date of publication of application: **11.10.2023**
(21) Application number: 22461534.4
(22) Date of filing: 06.04.2022
(51) Int. Cl.: F04B 43/00, F16K 7/12

(54) **DIAPHRAGM**

(71) Applicant: Goodrich Corporation, Charlotte, NC 28217 (US)
(72) Inventor: Kroczek, Piotr, 51-317 Wroclaw (PL); Tarnowski, Adrian, 51-317 Wroclaw (PL)
(74) Representative: Dehns

(57) **Abstract**

A diaphragm (80) for separating fluid chambers in a fluid assembly, the diaphragm comprising a sheet of flexible material having a central region (84) and a peripheral Region (86), and wherein the peripheral region is provided with a larger dimension peripheral feature (88) extending axially from the plane of the sheet.

## Description

### TECHNICAL FIELD

The present disclosure relates to a diaphragm for use in a fluid pump, pressure regulator or valve assembly where the diaphragm separates two fluid chambers and deflects in response to pressure differentials to equalise pressure in the chambers.

### BACKGROUND

Diaphragms find use in a variety of fluid control devices which operate based on fluid pressure differentials. The diaphragm provides a seal between different parts of the fluid assembly and also has a control function. The diaphragm is made of a flexible material and different fluid pressures on either side of the diaphragm cause the diaphragm to deflect so as to equalise the pressure on each side of the diaphragm. This behaviour can be used to pump fluid out of a fluid chamber when the diaphragm is caused to deflect into that chamber, e.g. in the case of a fluid pump, or to regulate pressure in a system. Diaphragms are also used in fluid valve assemblies, whereby deflection of the diaphragm, due to a pressure differential, causes a corresponding movement of a valve part connected to the diaphragm to open/close the valve.

The diaphragm is usually in the form of a sheet of flexible material that is secured across a fluid container, dividing the container into two chambers between which the pressure is to be equalised by the diaphragm. The diaphragm includes a central functional portion separating the chambers, and a peripheral portion by means of which the diaphragm is secured in position. The diaphragm is secured tightly to ensure sealing and, therefore, to prevent leakage from the container. Commonly, the peripheral portion is clamped between two shells or parts of the container and is secured in positioned by fixing the two shells to each other where the diaphragm periphery is clamped between them. In the case of a valve, for example, the central part of the diaphragm is attached to the movable valve part.

A problem has been observed in some assemblies in which diaphragms are clamped between housing parts, particularly (but not only) where the central part of the diaphragm is attached to other assembly parts such as pump parts or valve rods etc. It has been observed that when clamping the peripheral part of the diaphragm tightly between two shells or housing parts, when a large amount of compression is applied, this can introduce bias to the diaphragm causing the central part of the diaphragm to deflect out of its normal, flat state due to the bias, rather than due to any fluid pressure differential. This bias has been seen to allow the diaphragm to oscillate in the central region which creates an undesirable noise effect of the other assembly parts. For example, it causes valve parts to create clacking or vibrational noises in a valve assembly.

There is, therefore, a need to reliably and sealingly secure a diaphragm in position in a fluid assembly without creating such bias.

### SUMMARY

According to the present disclosure, there is provided a diaphragm for separating fluid chambers in a fluid assembly, the diaphragm comprising a sheet of flexible material having a central region and a peripheral region, and wherein the peripheral region is provided with a larger dimension peripheral feature extending axially from the plane of the sheet.

The peripheral feature is positioned in the peripheral region at a location where, in use, the diaphragm is clamped between two housing parts, and extends in the axial direction - i.e. out of the plane of the sheet - such that the peripheral feature is contacted by and compressed by the housing parts without or before the space between the clamping housing parts is equal to the thickness of the remainder of the diaphragm sheet. In other words, the peripheral features will be compressed as the housing parts are clamped together, and will provide the required sealing and securing of the diaphragm, but this will not create a bias on the rest of the diaphragm sheet, in particular the central portion.

The peripheral feature may take different forms and shapes as will be described in the examples below.

The disclosure also provides a fluid assembly housing including such a diaphragm, as well as a fluid valve assembly.

### BRIEF DESCRIPTION

Examples of the diaphragm according to the disclosure will be described by way of example only with reference to the drawings. It should be noted that these are examples only and variations are possible within the scope of the claims. The diaphragm is described here in the context of a diaphragm for a valve assembly, but the same principles may be used for diaphragms in otherfluid assemblies or systems.
Figure 1 shows a fluid housing part of a valve assembly having a diaphragm of the type to which the modifications of the present disclosure can be applied.
Figure 2 shows, in close-up, the region of an assembly such as shown in Fig. 1 where the diaphragm is clamped in position.
Figure 3 is used to explain the problem with known diaphragm designs.
Figure 4A shows an example of a diaphragm according to this disclosure, before assembly.
Figure 4B shows the example of Fig. 4A, after assembly.
Figure 4C shows a sectional view of the periphery of a diaphragm as shown in Figs. 4A and 4B.
Figure 4D shows a perspective view of a diaphragm as shown in Figs. 4A, 4B and 4C.
Figure 5A shows an alternative example of a diaphragm according to this disclosure, before assembly.
Figure 5B shows the example of Fig. 5A, after assembly.
Figure 6A shows an alternative example of a diaphragm according to this disclosure, before assembly.
Figure 6B shows the example of Fig. 6A, after assembly.

### DETAILED DESCRIPTION

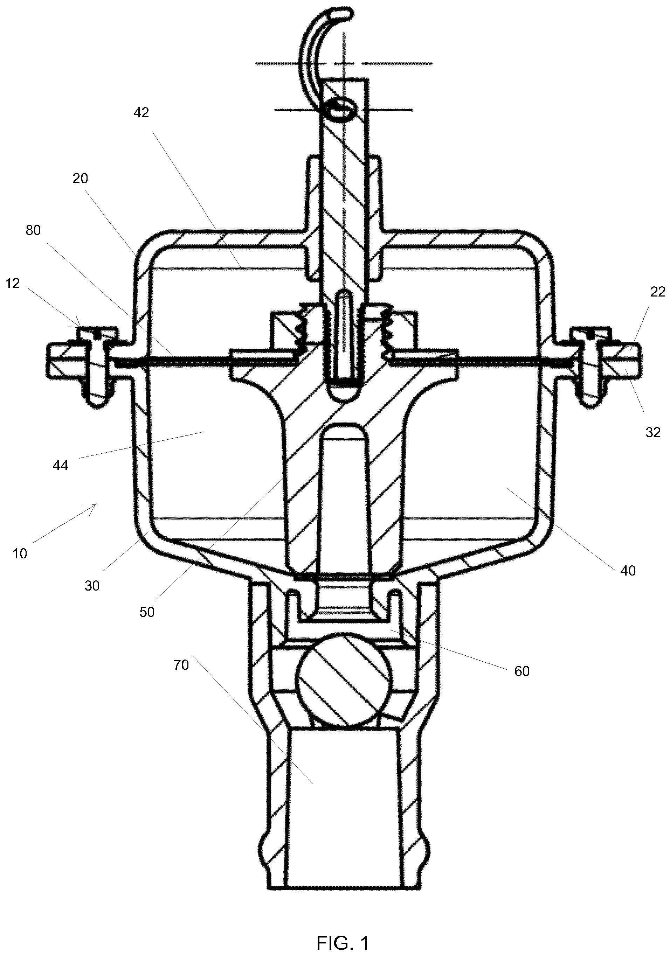

Figure 1 shows an example of a valve assembly having a valve housing 10 comprising an upper housing part 20 and a lower housing part 30. The housing parts 20, 30 combine to form a fluid container defining an area 40 that houses the valve fluid. In the example of a valve, the assembly includes a valve rod 50 that, when closed, sits in a valve seat 60 to prevent flow of fluid through a valve output 70.

The valve rod 50 is moved relative to the valve seat and opening due to fluid pressure differentials in the assembly. The movement results from deflection of a diaphragm 80 to which the valve rod is secured. The diaphragm is spanned across the area 40 in the valve housing, to divide the area into an upper fluid chamber 42 and a lower fluid chamber 44. The diaphragm is secured, and provides sealing of the housing between the upper and lower housing parts by being clamped and compressed, at its periphery, between the two housing parts where they meet. Typically, the upper and lower housing parts 20,30 are provided with mating flanges 22, 32 extending outwards of the housing, these clamp the periphery of the diaphragm between them as the housing is assembled and are secured in a tight clamped engagement by fasteners such as bolts 12. The valve rod 50 is secured to a central portion of the diaphragm inwards of the peripheral portion.

Figure 1 shows the diaphragm in a neutral state where it is substantially flat across the fluid area in the housing where it divides the area into the upper and lower chambers 42, 44. If the fluid pressure in the lower chamber increases relative to that of the upper chamber, the diaphragm will deflect upwards into the upper chamber, drawing the valve rod upwards and out of seating engagement with the valve seat, thus opening the vale such that fluid can flow out through the output 70.

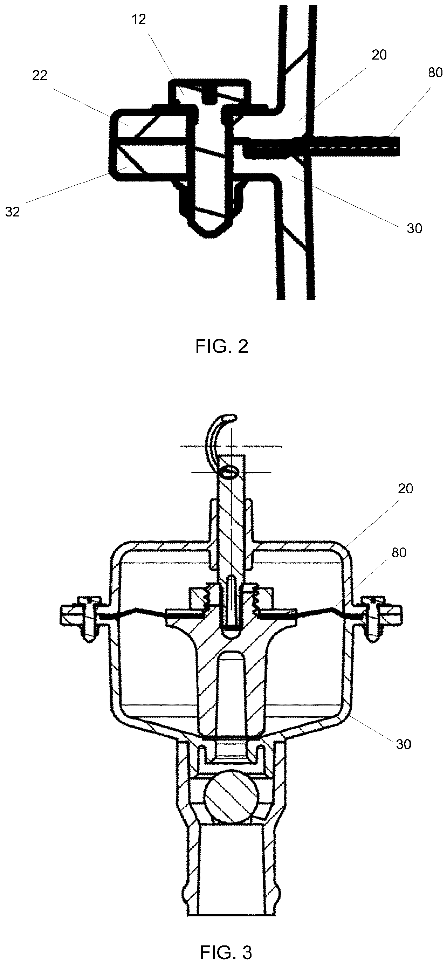

Figure 2 shows, in close-up, where the diaphragm peripheral portion is clamped between the upper and lower housing parts 20, 30. As the flanges 22, 32 are tightly engaged e.g. by tightening the screws or bolts 12, the peripheral region of the diaphragm is compressed between the flanges to provide a seal between the flanges as well as to secure the diaphragm in place.

In some cases, though, excessive compression of the peripheral region of the diaphragm results in a bias on the diaphragm 80 as can be seen in Fig. 3, where part of the central portion of the diaphragm within the fluid area of the housing is caused to deflect due to the clamping compressive force. This can cause noise e.g. due to parts of the valve assembly knocking against each other or vibrating as oscillations are induced in the diaphragm.

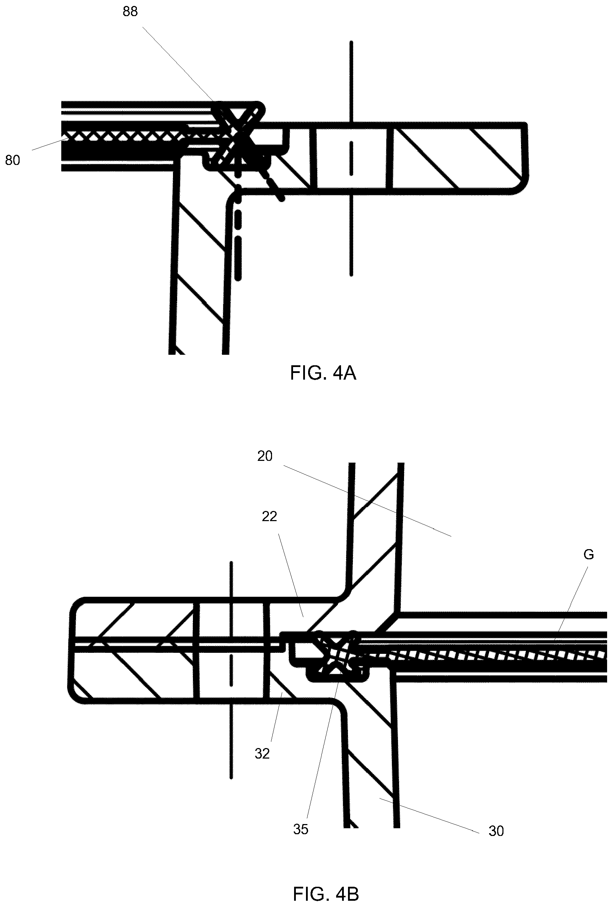

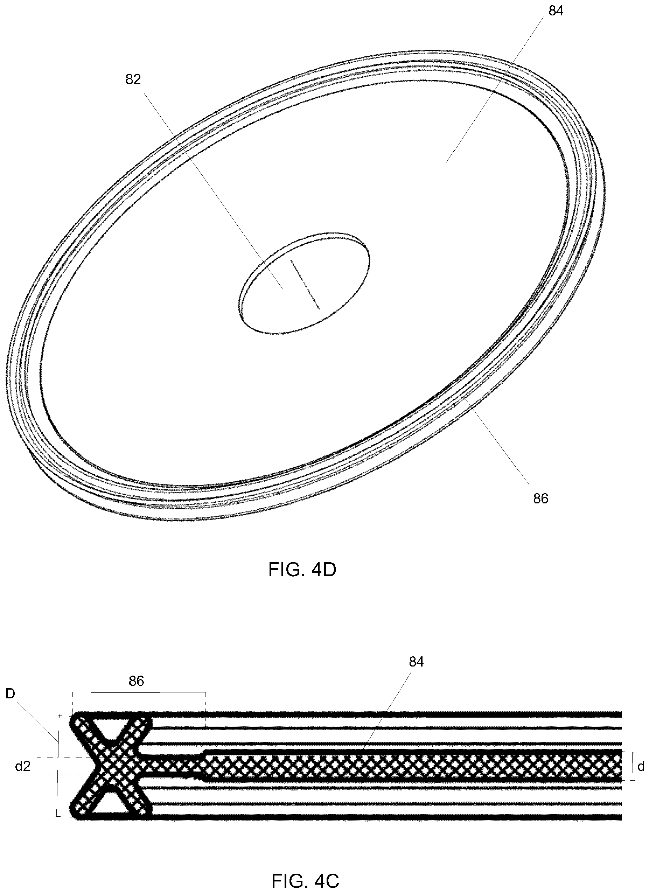

The present disclosure modifies the design of the diaphragm to address this problem as will be discussed further with reference to Figs. 4 to 6.

Referring first to Fig. 4D, the diaphragm is in the form of a substantially flat sheet of flexible material having a given sheet thickness d. The shape of the sheet will depend on the application of the diaphragm. In the example shown, the sheet is substantially circular and, here, has a central hole 82. The diaphragm sheet may, in some examples, be a complete sheet without a hole and can, of course, be shapes other than circular.

The diaphragm has a central region 84 which is the area of the sheet that separates the fluid chambers, in use and is the functional part of the diaphragm in terms of pressure regulation. Radially outwards of the central region, the diaphragm has a peripheral region 86 which includes the region that will be clamped between the housing parts, in use.

To avoid the bias effect of the compression of the diaphragm, the peripheral region 86 is formed with a peripheral feature 88 that has a thickness D greater than the thickness d of the central region. The peripheral feature may form the entire peripheral region or may form just a part of the peripheral region. In the latter case, the remainder of the peripheral region, forming an intermediate region, may have the same thickness d as the central region or may, as shown in the examples, have a smaller thickness d2, less than that of the central region.

When the diaphragm 80 is positioned in the housing, with the central region spanning the fluid area and separating the upper and lower chambers, the peripheral region is located where it will be clamped between the two housing parts when they are mated. A recess 35 may be provided in the upper or lower flange to locate the peripheral feature 88 as the housing is being assembled to prevent the diaphragm falling out. As the housing parts are clamped together (in this case as the flanges 22, 32 are brought together into clamping engagement, they will begin to compress the peripheral feature when they are a distance D apart. Because this distance D is greater than the thickness of the rest of the diaphragm, only the peripheral feature 88 will be compressed. As the two housing parts are further moved together, they will further clamp the peripheral feature between them until they are in full clamping engagement but without compressing the diaphragm central region 86. The thickness D of the peripheral feature 88 is such that a gap G remains between the diaphragm and at least one of the housing parts when they are fully engaged.

In one example, the peripheral feature 88 has a so-called quatring or X shape. As this is compressed (Fig. 4B) the legs of the X shape are spread to provide a seal between the housing parts.

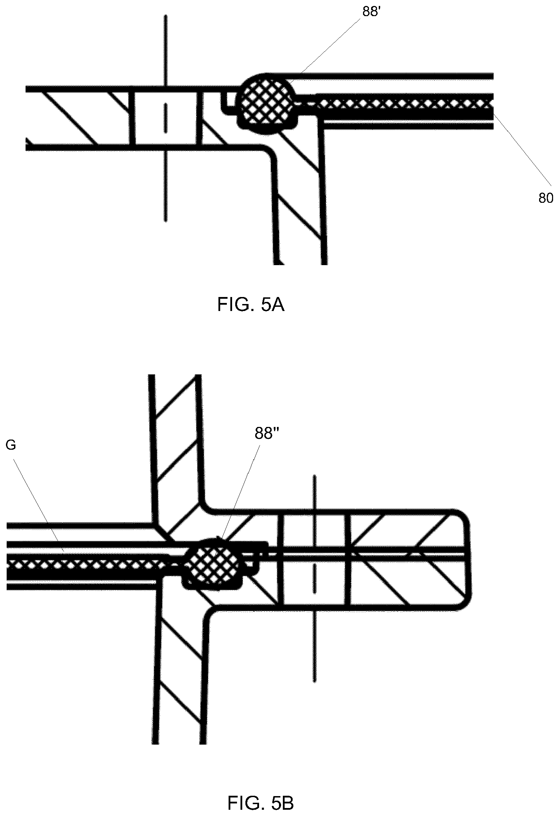

Figs 5A and 5B show an alternative design, where the peripheral feature is in the form of an O-ring 88' where the O shape is squashed as shown in Fig. 5B as the housing parts are clamped together.

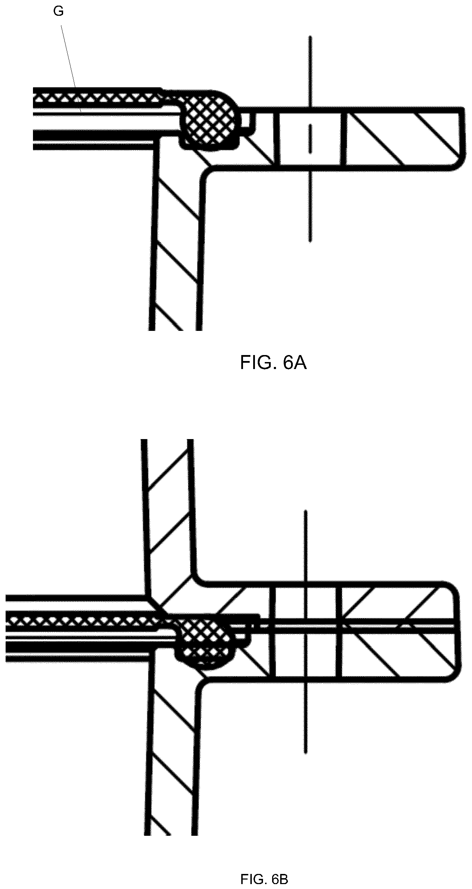

An alternative O-ring shaped peripheral feature 88" is shown in Figs. 6A and 6B. Here, rather than the feature extending from both sides of the sheet, the O-ring extends from one side only (here towards the lower flange, but this could equally be designed to extend in the opposite direction.

Regardless of the shape of the thickened peripheral feature, it can be seen that only this feature is compressed as the housing parts are engaged and the remainder of the diaphragm, in particular the central region 86, is not squeezed, due to the gap G.

The diaphragm is secured with the central region in its natural position to reliably regulate pressure in the assembly and the peripheral region ensures effective sealing, but without causing bias of the diaphragm.

## Claims

1. A diaphragm for separating fluid chambers in a fluid assembly, the diaphragm comprising a sheet of flexible material having a central region (84) and a peripheral region (86), and wherein the peripheral portion is provided with a larger dimension peripheral feature (88) extending axially from the plane of the sheet.

2. The diaphragm of claim 1, wherein the central region has a first thickness (d) and the peripheral feature has a second thickness (D), greater than the first thickness.

3. The diaphragm of claim 1 or 2, wherein the peripheral region comprises the peripheral feature and an intermediate region between the peripheral feature and the central region.

4. The diaphragm of claim 4, wherein the intermediate region has a third thickness (d2) less than the first thickness.

5. The diaphragm of any preceding claim, wherein the peripheral feature comprises a quatring-shaped feature.

6. The diaphragm of any of claims 1 to 4, wherein the peripheral feature comprises an O-ring shaped feature (88').

7. The diaphragm of claim 6, wherein the O-ring shape extends relative to both sides of the plane of the diaphragm.

8. The diaphragm of claim 6, wherein the O-ring shape extends only relative to one side of the plane of the diaphragm.

9. A fluid regulation assembly comprising a housing (10) having an upper housing part (20) and a lower housing part (30) arranged to mate to define therebetween a fluid containment area, and a diaphragm (80) as claimed in any preceding claim secured between the upper and lower housing parts when they are mated such that the central region (84) of the diaphragm extends across the fluid containment area and divides it into an upper (42) and a lower (44) fluid chamber, wherein the peripheral region is clamped between the upper and lower housing parts to provide a seal therebetween.

10. A fluid regulation assembly as claimed in claim 9, wherein the upper and lower housing parts each comprise a flange (22, 32) by which they mate and between which the peripheral feature is clamped.

11. A fluid regulation assembly as claimed in claim 10, further comprising fasteners to secure the flanges of the upper and lower housing parts to each other with the peripheral region secured therebetween.

12. A fluid regulation assembly as claimed in any of claims 9 to 11, whereby at least one of the upper and lower housing parts is provided with a recess (53) to receive the peripheral feature.

13. A fluid regulation assembly as claimed in any of claims 9 to 12, wherein the thickness of the central region and the thickness of the peripheral feature are selected such that when the housing parts are spaced so as to compress the peripheral feature a gap G remains between the upper and/or lower housing part and the parts of the diaphragm other than the peripheral feature.

14. A fluid regulation assembly as claimed in any of claims 9 to 13, being a valve.

15. A fluid regulation assembly as claimed in claim 14, wherein a valve rod (50) is attached to the central region of the diaphragm so as to open and close the valve responsive to movement of the valve caused by a pressure differential between the upper and lower fluid chambers.
